(19) Europäisches Patentamt
European Patent Office
Office européen des brevets

(11) Veröffentlichungsnummer: **0 001 412**
**B1**

(12) # EUROPÄISCHE PATENTSCHRIFT

(45) Veröffentlichungstag der Patentschrift: **12.05.82**

(51) Int. Cl.³: **C 08 G 73/06,** C 08 G 75/32, C 08 G 18/78, C 07 D 498/10, C 07 D 513/10

(21) Anmeldenummer: **78100919.6**

(22) Anmeldetag: **18.09.78**

(54) **Polyparabansäurederivate und Verfahren zu ihrer Herstellung.**

(30) Priorität: **28.09.77 DE 2743517**

(43) Veröffentlichungstag der Anmeldung: **18.04.79 Patentblatt 79/8**

(45) Bekanntmachung des Hinweises auf die Patenterteilung: **12.05.82 Patentblatt 82/19**

(84) Benannte Vertragsstaaten: **DE FR GB**

(56) Entgegenhaltungen:
**AT-B-320 005**
**DE-A-2 032 077**
**DE-A-2 625 721**
**DE-A-2 625 722**

(73) Patentinhaber: **BAYER AG, Zentralbereich Patente, Marken und Lizenzen, D-5090 Leverkusen 1, Bayerwerk (DE)**

(72) Erfinder: **Giesecke, Henning, Dr., Kalk-Muelheimer-Strasse 400, D-5000 Köln 80 (DE)**
Erfinder: **Hocker, Jürgen, Dr., Eichenweg 6, D-5060 Bergisch Gladbach 2 (DE)**
Erfinder: **Merten, Rudolf, Dr., Berta-von-Suttner-Strasse 55, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Polyparabansäurederivate und Verfahren zu ihrer Herstellung

Gegenstand der Erfindung sind Polyparabansäurederivate und Verfahren zu ihrer Herstellung.
Die erfindungsgemäßen Polyparabansäurederivate enthalten die Struktureinheit (I)

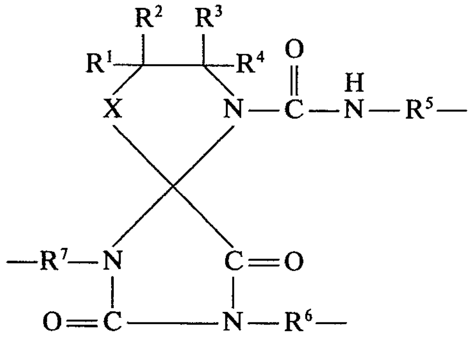

(I)

wiederholt im Molekül, wobei

$R^5$, $R^6$ und $R^7$ gleich oder verschieden für einen gegebenenfalls substituierten aliphatischen, aromatischen oder aliphatisch-aromatischen Rest, und
$R^1$, $R^2$, $R^3$ und $R^4$ gleich oder verschieden, für Wasserstoff einen gegebenenfalls substituierten, aliphatischen, aromatischen oder aliphatisch-aromatischen Rest stehen und
X O oder S bedeutet.

Die wiederkehrenden Einheiten der Formel (I) sind über die Reste $R^5$, $R^6$ und/oder $R^7$ miteinander verbunden.

Bevorzugt leiten sich die ein-, zwei-, vorzugsweise zwei-, oder mehrwertigen Reste $R^5$, $R^6$ und $R^7$ von ggf. substituierten aliphatischen Resten mit 2–20, vorzugsweise 2–12 C-Atomen wie z. B. Alkylresten mit 2–12 C-Atomen, ggf. substituierten aromatischen Resten mit 6–20, vorzugsweise 6–16 C-Atomen wie z. B. Arylresten mit bis zu 20 Kohlenstoffatomen, oder Diarylätherreste, ferner Resten, die sich von $C_1-C_{15}$-Alkyl- bzw. $C_6-C_{16}$-Arylresten organischer oder anorganischer Säuren ableiten, oder gegebenenfalls substituierten aliphatisch-aromatischen Resten mit 7–20 C-Atomen, vorzugsweise 7–17 C-Atomen wie z. B. Arylalkylresten mit 7–17 C-Atomen, wie z. B. Xylylen ab.

$R^1$, $R^2$, $R^3$ und $R^4$ sind bevorzugt Wasserstoff oder leiten sich von gegebenenfalls substituierten aliphatischen Resten mit 1–20, vorzugsweise 1–12 C-Atomen, wie z. B. Alkylresten mit 1–6 Kohlenstoffatomen oder Cycloalkylresten mit 5–7 Kohlenstoffatomen, gegebenenfalls substituierten aromatischen Resten mit 6–20, vorzugsweise 6–16 C-Atomen, wie z. B. Arylreste mit 6–16 C-Atomen, beispielsweise Phenyl, Naphthyl, Diphenyl, Diphenylätherreste, oder gegebenenfalls substituierten aliphatisch-aromatischen Reste mit 7–20 C-Atomen wie z. B. Arylalkylreste mit 7–17 C-Atomen beispielsweise Benzyl, ab. $R^1$ und $R^2$ bzw. $R^3$ und $R^4$ können auch unter Bildung eines cycloaliphatischen Ringes mit 5–10 C-Atomen miteinander verbunden sein.

Als Substituenten an den vorgenannten aliphatischen, aliphatisch-aromatisch oder aromatischen Resten kommen beispielsweise in Betracht:

Aryl mit $C_6-C_{16}$ (vorzugsweise Phenyl), Alkohol-, Aldehyd- und/oder Ketongruppen, CN, $NO_2$, Alkylmercapto- und Alkoxygruppen mit vorzugsweise 1–4 C-Atomen, Carbonestergruppen, Phosphonestergruppen, Phosphinestergruppen und Sulfonsäureestergruppen- vorzugsweise solche Ester mit niederen aliphatischen Alkoholen, vorzugsweise mit 1 bis 8, insbesondere 1 bis 4 C-Atomen-, di-substituierte Aminogruppe, disubstituierte Carboxamidgruppe und disubstituierte Sulfonamidgruppe- vorzugsweise N-substituiert durch niedere aliphatische Reste (vorzugsweise mit 1–4 C-Atomen)-, Halogene (vorzugsweise Fluor, Chlor, Brom), niedere Halogenalkylreste (vorzugsweise mit 1 bis 4 C-Atomen und vorzugsweise mit Fluor und/oder Chlor) sowie im Falle der aromatischen Reste auch niedere Alkylgruppen, vorzugsweise mit 1 bis 4 C-Atomen.

Die Polyparabansäurederivate der Erfindung haben Molgewichte von 1000–50 000, insbesondere von 4000–30 000 (gemessen nach der osmot. Methode). Sie zeigen charakteristische IR-Absorptionen bei 1720–1740 $cm^{-1}$ (stark) und 1775–1800 $cm^{-1}$ (schwach) neben den Harnstoffcarbonylbanden bei 1630–1700 $cm^{-1}$ (stark).

Die Polyparabansäurederivate der vorliegenden Erfindung werden hergestellt durch Umsetzung von 2-Oxazoline. 2-Thiazolinen der allgemeinen Formel (II)

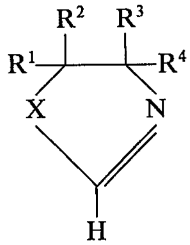

(II)

worin

$R^1$ bis $R^4$ und X die oben angegebene Bedeutung haben, mit wenigstens einem organischen Polyisocyanat.

Für die Durchführung des Verfahrens eignen sich bevorzugt folgende 2-Oxazoline:

2-Oxazolin, 5-Methyl-2-oxazolin, 4,4-Dimethyl-2-oxazolin, 4-Äthyl-2-oxazolin, 5-Hydroxymethyl-2-oxazolin, 5-Benzyl-2-oxazolin, 4-Phenyl-2-oxazolin, Hexahydrobenzoxazol.

Ferner folgende 2-Thiazoline:

2-Thiazolin, 5-Methyl-2-thiazolin, 4,4-Dimethyl-2-thiazolin, 4-Äthyl-2-thiazolin, 5-Benzyl-2-thiazolin, 4-Phenyl-2-thiazolin, Hexahydrobenzthiazol.

Unter Polyisocyanaten im Sinne der Erfindung werden organische Isocyanate mit wenigstens 2 NCO-Gruppen pro Molekül verstanden.

Vorzugsweise werden als erfindungsgemäß einzusetzende Ausgangskomponenten aliphatische mit $C_2-C_{20}$, cycloaliphatische $C_5-C_{12}$ araliphatische $C_7-C_{20}$, aromatische mit $C_6-C_{20}$ und heterocyclische mit $C_4-C_{20}$ Polyisocyanate in Betracht, wie sie z. B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanato-methyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z. B. in der belgischen Patentschrift 723 640 beschrieben werden, Estergruppen aufweisende Polyisocyanate, wie sie z. B. in den britischen Patentschriften 956 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden die Isocyanate, besonders bevorzugt Polyisocyanate der allgemeinen Formel (III) eingesetzt

$$R_5(NCO)_n \qquad (III)$$

in der $R_5$ die oben angegebene Bedeutung hat, und n für eine ganze Zahl von 1 – 4, bevorzugt 2, steht. Auch die Reste $R_6$ und $R_7$ in der allgemeinen Formel (I) leiten sich von Isocyanaten der allgemeinen Formel (III) ab.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen Allophanatgruppen, Isocyanuratgruppen, Harnstoffgruppen oder Biuretgruppen aufweisenden Polyisocyanate (»modifizierte Polyisocyanate«).

Zur Verringerung des Vernetzungsgrades der Polyparabansäurederivate können neben Polyisocyanaten auch aliphatische oder aromatische Monoisocyanate eingesetzt werden.

Das Verfahren wird im allgemeinen so durchgeführt, daß man die Ausgangskomponenten in einem organischen Lösungsmittel zwischen –20 und 400° C umsetzt, wobei das entstandene Polymerisat in Lösung bleibt oder ausfällt. Es kann durch Abdestillieren des Lösungsmittels isoliert werden. Die Mengen der Ausgangssubstanzen können so gewählt werden, daß pro Mol 2-Oxazolin bzw. 2-Thiazolin 0,5 bis 10 Mole, vorzugsweise mindestens 3 Mole, Isocyanatgruppen zur Verfügung stehen. Für das Verfahren geeignete Lösungsmittel sind gegen NCO-Gruppen inerte Verbindungen, z. B. aromatische Kohlenwasserstoffe, chlorierte aromatische Kohlenwasserstoffe, Benzonitril, aliphatische Kohlenwasserstoffe, Ester und Ketone. Besonders geeignet sind Toluol, Xylol, Mesitylen, Chlorbenzol, Dichlorbenzol, N-Methylpyrrolidon, Dimethylformamid, Dimethylacetamid, Hexamethylphosphorsäuretriamid, Tetramethylharnstoff, Nitromethan und Nitrobenzol. Es ist aber auch möglich, die Komponenten in Substanz umzusetzen.

Die Reaktionszeiten liegen meist zwischen 15 Minuten und 100 Stunden, vorzugsweise zwischen 30 Minuten und 20 Stunden, können aber in besonderen Fällen auch darüber oder darunter liegen.

Die Reaktionstemperaturen werden je nach Ausgangsmaterial zwischen –20° und 400° C gewählt. Bevorzugt arbeitet man bei 20° C bis 350° C, besonders bevorzugt im Bereich von 20° C bis 250° C.

Die Polymerisation kann unter Einsatz der üblicherweise in der Isocyanatchemie verwendeten sauren oder basischen Katalysatoren, z. B. Metallalkoholaten, tert. Aminen durchgeführt werden.

Die so erhaltenen Polyparabansäurederivate können NCO-Endgruppen tragen und erlauben somit eine Vernetzung mit den in der Isocyanatchemie üblichen Stoffen wie z. B. Polyolen oder Polyaminen oder eine Vernetzung unter Bildung von Isocyanuratstrukturen. Auch Kettenverlängerungen unter Ausbildung von Carbodiimid- bzw. Uretdionstrukturen sind möglich.

Bei dem Verfahren der vorliegenden Erfindung können auch andere polymere Stoffe, z. B. Polyester, Polyäther, Polyamide, Polyurethane, Polyolefine, Polyacetale, Polyepoxide, Polyimide, Polyamidine, Polyimiddiisocyanate, Polyhydantoine in bekannter Weise mitverwendet werden. Solche Materialien können den fertigen Polymeren der vorliegenden Erfindung zugemischt, können aber auch mit einpolymerisiert werden.

Eine besondere Ausführungsform der Verfahren besteht in der Mitverwendung von Hydroxygruppen enthaltenen Polyestern oder Polyäthern unter Einsatz überschüssiger Mengen an Isocyanatkomponenten, die zu einer Kombination von Parabansäure- und Urethan-Bildung führt. Zu diesem Zweck werden z. B. Mischungen aus Polyhydroxylverbindungen, Polyisocyanat (derivat) und einer Verbindung der allgemeinen Formel (II), gegebenenfalls nach Vorkondensation von zwei dieser Komponenten, in einem gleichzeitigen endgültigen Arbeitsgang in den Kunststoff übergeführt.

Als Hydroxylgruppen enthaltende Polyester werden die bekannten Typen eingesetzt, wie sie aus Polycarbonsäuren, z. B. Bernstein-, Adipin-, Sebazin-, Phthal-, Isophthal-, Terephthal-, Ölsäuren und Polyalkoholen, z. B. Glykol, Diäthylenglykol, Triäthylenglykol, Propylenglykol, Dipropylenglykol, Glycerin, Trimethylolpropan, Pentaerythrit, in üblicher Weise erhalten werden können.

Die erfindungsgemäßen Polyparabansäurederivate sowie ihre Abmischungen sind temperaturbeständige Kunststoffe mit ausgezeichneten mechanischen Eigenschaften, die als Lacke, Folien usw. Verwendung finden können. Sie können die für Kunststoffe üblichen Zusätze wie Füllstoffe, Pigmente, Antioxidantien und Weichmacher enthalten.

Gemäß der Lehre der österreichischen Patentschrift 320 665 werden nur Monoparabansäureverbindungen erhalten, die durch Umsetzung von Salzen aus der Benzthiazol-, Thiazol- oder Imidazolreihe mit Isothiocyanaten hergestellt werden. Es unterscheiden sich daher sowohl die Ausgangsprodukte zur Herstellung der Parabansäurederivate als auch die daraus gewonnenen Parabansäurederivate. Hinzu kommt noch, daß nach dem bekannten Verfahren Salze als Ausgangsmaterialien eingesetzt werden müssen, so daß die Reaktion in Gegenwart von Basen durchgeführt werden muß. Dabei entstehen bei der Umsetzung Salze als unerwünschte Nebenprodukte, die bei der Aufarbeitung des Endproduktes entfernt werden müssen. Diese Schwierigkeiten werden mit dem erfindungsgemäßen Verfahren vermieden, da bei dieser Reaktion keine Nebenprodukte bzw. Abspaltungsprodukte entstehen.

Nach der Lehre der deutschen Auslegeschrift 2 032 077 können Polyparabansäurederivate hergestellt werden, indem man heterocyclische Salze, elektronenreiche Olefine oder Ortho-Ameisensäurederivate mit Polyisothiocyanaten umsetzt. Alle drei Verfahren unterscheiden sich von den erfindungsgemäßen und führen auch zu unterschiedlichen Polyparabansäurederivaten, wie man an

der Substitution bzw. Verknüpfungsmöglichkeit am Stickstoff in der Spiroverbindung entnehmen kann. Im einzelnen ist dazu auszuführen, daß für die Herstellung der Polyparabansäuren durch Einsatz heterocyclischer Salze die obigen Ausführungen mit allen Nachteilen gelten.

Bei der Addition von Olefinen an Polyisocyanaten sind nur Polymere zugänglich, die über die wiederkehrende Parabansäureeinheit difunktionell verknüpft sind. Eine Verknüpfung über den Spiro-Anteil der heterocyclischen Einheit ist durch den Einsatz unterschiedlicher Ausgangsverbindungen ausgeschlossen.

Auch bei der Reaktion von Ortho-Ameisensäurederivaten mit Polyisocyanaten sind die erfindungsgemäßen Polyparabansäurederivate nicht zugänglich, da die Ausbildung einer Spirostruktur in der wiederkehrenden Struktureinheit nicht möglich ist. Außerdem treten bei dieser Reaktion auch wieder Spaltprodukte mit all den damit verbundenen Nachteilen auf, wie man dem Reaktionsschema auf Seite 7 der DAS entnehmen kann. Demgegenüber werden mit dem erfindungsgemäßen Verfahren durch einfache Umsetzung von 2-Oxazolinen bzw. 2-Thiazolinen mit Polyisocyanaten, gegebenenfalls Monoisocyanaten, ohne störende Nebenreaktionen neue Polyparabansäurederivate erhalten, die bisher nicht zugänglich waren.

## Beispiel 1

Zu 16,7 Gew.-Teilen Isophorondiisocyanat werden innerhalb von 15 Min. bei 100°C 3,6 Gew.-Teile 2-Oxazolin zugetropft. Anschließend wird 2 Stunden bei 150°C gerührt. Man erhält 18,3 Gew.-Teile eines farblosen Polymeren. Viskosität einer 30%igen Lösung in o-Dichlorbenzol bei 25°C: 14 140 m Pa · s (cP).

IR in Dichlorbenzol: 1786 $cm^{-1}$, 1728 $cm^{-1}$, 1679 $cm^{-1}$ (C = 0).

## Beispiel 2

Zu 26,1 Gew.-Teilen eines Isomerengemisches von 80 Teilen 2,4-Toluylen-diisocyanat und 20 Gew.-Teilen 2,6-Toluylendiisocyanat werden bei 100°C 4 Gew.-Teile 5-Methyl-2-oxazolin innerhalb von 10 Min. zugetropft. Anschließend werden 34 Gew.-Teile Kresol und 4,5 Gew.-Teile 5-Methyl-2-oxazolin zugegeben und die Lösung 2 Stunden bei 175°C gerührt. Man erhält 68 Gew.-Teile einer 50%igen Lösung eines Polymeren in Kresol. Viskosität einer 30%igen Lösung in Kresol bei 25°C: 19 400 m Pa · s (cP).

## Beispiel 3

100,8 Gew.-Teile Hexamethylendiisocyanat und 9,9 Gew.-Teile 4,4-Dimethyl-2-oxazolin werden 1 Stunde bei 100°C und anschließend 1 Stunde bei 150°C gerährt. Nach Einengen der Lösung im Hochvakuum bei 160°C werden 43,0 Gew.-Teile eines Prepolymeren mit 21,2% NCO erhalten.

30 Gew.-Teile des Prepolymeren werden mit 40 Gew.-Teilen einer 65%igen Lösung eines aus 52 Gew.-Teilen Phthalsäureanhydrid, 0,6 Gew.-Teilen Maleinsäureanhydrid und 54 Gew.-Teilen Trimethylolpropan hergestellten, 5,2% Hydroxylgruppen enthaltenden Polyesters in Äthylglykolacetat und 0,1 Gew.-Teilen Sn(II)-dioctoat vermischt. Man erhält einen schnell trocknenden Lack.

## Beispiel 4

1 Gew.-Teil 4,4-Dimethyl-2-oxazolin und 1 Gew.-Teil Hexamethylendiisocyanat werden bei Raumtemperatur verrührt. Das Gemisch wird auf ein Erischsen-Blech 180 x 70 x 0,2 mm gestrichen und 10 Min. bei 200°C eingebrannt. Man erhält einen gut haftenden Lack mit einer Erweichungstemperatur von 215—250°C.

## Beispiel 5

Zu 18,8 Gew.-Teilen Diphenylmethan-diisocyanat-(4,4') in 20 Gew.-Teilen Toluol werden bei 25°C innerhalb 1 Stunde 5,0 Gew.-Teile 4,4-Dimethyl-2-oxazolin zugetropft. Anschließend wird 1 Stunde unter Rückfluß gerührt. Nach Filtrieren erhält man 17,6 Gew.-Teile eines festen Polymeren mit für Parabansäurederivate charakteristischen IR-Absorptionen bei 1793 $cm^{-1}$ (schwach) und 1739 $cm^{-1}$ (stark).

## Beispiel 6

Zu 37,5 Gew.-Teilen Diphenylmethan-diisocyanat-(4,4') in 50 Gew.-Teilen Toluol werden bei 80°C innerhalb von 30 Min. 8,7 Gew.-Teile 2-Thiazolin zugetropft. Anschließend wird 2 Stunden bei 110°C gerährt. Nach Filtrieren erhält man 45,4 Gew.-Teile eines festen Polymeren mit IR-Absorptionen bei 1788 $cm^{-1}$ (schwach), 1729 $cm^{-1}$ (stark) und 1674 $cm^{-1}$ (stark).

Beispiel 7

Zu 9,7 Gew.-Teilen 4,4-Dimethyl-2-oxazolin in 40 Gew.-Teilen Toluol werden bei 100° C innerhalb von 30 Min. 26,1 Gew.-Teile 2,4-Toluylen-diisocyanat zugetropft. Anschließend wird 9 Stunden bei 110° C gerührt. Nach Filtrieren erhält man 31,8 Gew.-Teile eines festen Polymeren mit für Parabansäurederivate charakteristischen IR-Absorptionen bei 1793 $cm^{-1}$ (schwach) und 1719 $cm^{-1}$ (stark). Viskosität einer 20%igen Lösung in Kresol bei 25° C: 13 200 m Pa · s (cP).

**Patentansprüche**

1. Polyparabansäurederivate, die die Struktureinheit (I)

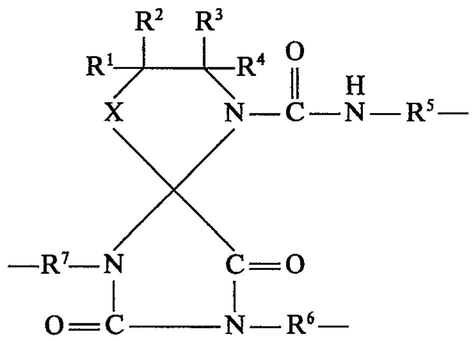

(I)

wiederholt im Molekül enthalten und ein Molgewicht von 1000 – 50 000 haben, wobei

$R^5$, $R^6$ und $R^7$ gleich oder verschieden, für einen gegebenenfalls substituierten aliphatischen, aliphatisch-aromatischen oder aromatischen Rest,
$R^1$, $R^2$, $R^3$ und $R^4$ gleich oder verschieden, für Wasserstoff oder einen gegebenenfalls substituierten aliphatischen, aliphatisch-aromatischen oder aromatischen Rest stehen, und
X für O oder S steht

und die wiederkehrenden Struktureinheiten (I) über die Reste $R^5$, $R^6$ und/oder $R^7$ verbunden sind.

2. Polyparabansäurederivate gemäß Anspruch 1, dadurch gekennzeichnet, daß sich die Reste $R^5$, $R^6$ und $R^7$ von gegebenenfalls substituierten aliphatischen Resten mit 2 – 20 C-Atomen, gegebenenfalls substituierten aromatischen Resten mit 6 – 20 C-Atomen, Resten von $C_1 - C_{15}$-Alkyl- bzw. $C_6 - C_{16}$-Arylestern organischer oder anorganischer Säuren oder gegebenenfalls substituierte aliphatisch-aromatischen Resten, mit 7 – 20 C-Atomen ableiten.

3. Polyparabansäurederivate gemäß Ansprüchen 1 und 2, dadurch gekennzeichnet, daß sich die Reste $R^1$, $R^2$, $R^3$ und $R^4$ von Wasserstoff oder von gegebenenfalls substituierten aliphatischen Resten mit 1 – 20 C-Atomen, gegebenenfalls substituierten aromatischen Resten mit 6 – 20 C-Atomen, oder gegebenenfalls substituierten aliphatisch-aromatischen Resten mit 7 – 20 C-Atomen ableiten oder $R^1$ und $R^2$ bzw. $R^3$ und $R^4$ zusammen einen cycloaliphatischen Ring mit 5 – 10 C-Atomen bilden.

4. Verfahren zur Herstellung von Polyparabansäurederivaten gemäß Ansprüchen 1 – 3, dadurch gekennzeichnet, daß man 2-Oxazoline bzw. 2-Thiazoline der Formel (II),

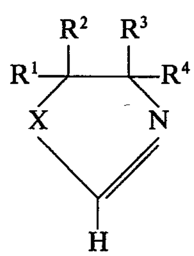

(II)

in der $R^1$ bis $R^4$ und X gemäß Anspruch 1 und 3 definiert sind, mit wenigstens einem organischen Polyisocyanat und ggf. einem aliphatischen oder aromatischen Monoisocyanat bei Temperaturen zwischen – 20 und 400° C umsetzt.

5. Verfahren gemäß Anspruch 4, dadurch gekennzeichnet, daß man als Isocyanate solche der allgemeinen Formel (III)

$$R_5(NCO)_n \qquad \text{(III)}$$

eingesetzt werden, in der $R_5$ die in Anspruch 1 und 2 angegebene Bedeutung hat, und n für eine ganze Zahl von 1 – 4 steht.

6. Verfahren gemäß Anspruch 5, dadurch gekennzeichnet, daß n für 2 steht.

**Claims**

1. Polyparabanic acid derivatives which contain the structural unit (I)

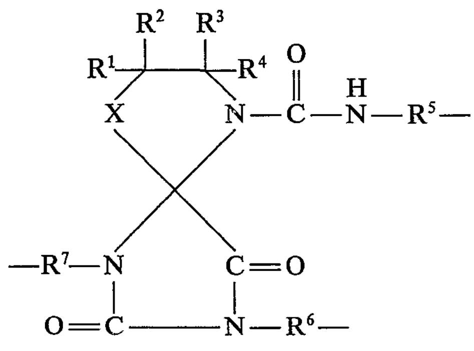

(I)

repeated in the molecule and which have a molecular weight of from 1000 – 50 000, in which structural unit (I)

$R^5$, $R^6$ and $R^7$ are identical or different and represent an optionally substituted aliphatic, aliphatic-aromatic or aromatic radical,

$R^1$, $R^2$, $R^3$ and $R^4$ are identical or different and represent hydrogen or an optionally substituted aliphatic, aliphatic-aromatic or aromatic radical, and

X represents O or S

and the recurrent structural units (I) are joined together through the radicals $R^5$, $R^6$ and/or $R^7$.

2. Polyparabanic acid derivatives according to Claim 1, characterised in that the radicals $R^5$, $R^6$ and $R^7$ are derived from optionally substituted aliphatic radicals having 2 – 20 C-atoms, optionally substituted aromatic radicals having 6 – 20 C-atoms, radicals of $C_1 - C_{15}$-alkyl esters or $C_6 - C_{16}$-aryl esters of organic or inorganic acids, or optionally substituted aliphatic-aromatic radicals having 7 – 20 C-atoms.

3. Polyparabanic acid derivatives according to Claims 1 and 2, characterised in that the radicals $R^1$, $R^2$, $R^3$ and $R^4$ are derived form hydrogen or optionally substituted aliphatic radicals having 1 – 20 C-atoms, optionally substituted aromatic radicals having 6 – 20 C-atoms, or optionally substituted aliphatic-aromatic radicals having 7 – 20 C-atoms or $R^1$ and $R^2$ together, and $R^3$ and $R^4$ together, form a cycloaliphatic ring having 5 – 10 C-atoms.

4. Process for the preparation of polyparabanic acid derivatives according to Claims 1 – 3, characterised in that 2-oxazolines or 2-thiazolines of the formula (II)

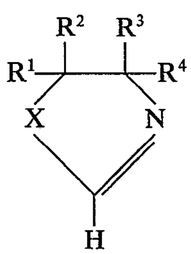

(II)

in which $R^1$ to $R^4$ and X are defined according to Claim 1 and 3, are reacted with at least one organic polyisocyanate and optionally an aliphatic or aromatic monoisocyanate at temperatures between – 20 and 400° C.

5. Process according to Claim 4, characterised in that the isocyanates used are those of the general formula (III)

$$R_5(NCO)_n \quad \text{(III)}$$

in which $R_5$ has the meaning given in Claim 1 and 2 and n represents an integer from 1 – 4.

6. Process according to Claim 5, characterised in that n represents 2.

**Revendications**

1. Dérivés d'acide polyparabanique, qui comportent le motif structural (II:

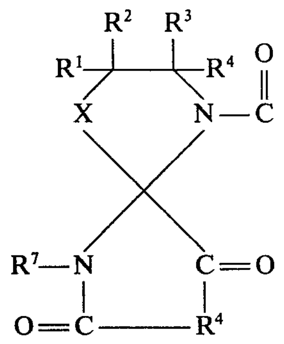

(I)

répété dans la molécule et qui ont un poids moléculaire de 1000 à 50 000,

$R^5$, $R^4$ et $R^7$, égaux ou différents, représentent un reste aliphatique, aliphatique-aromatique ou aromatique éventuellement substitué,
$R^1$, $R^2$, $R^3$ et $R^4$, égaux ou différents, représentent de l'hydrogène ou un reste aliphatique, aliphatique-aromatique ou aromatique éventuellement substitué, et
X représente O ou S

et les motifs structuraux (I) répétés sont liés par l'intermédiaire des restes $R^5$, $R^6$ et/ou $R^7$.

2. Dérivés d'acide polyparabanique suivant la revendication 1, caractérisés en ce que les restes $R^5$, $R^6$ et $R^7$ sont dérivés de restes aliphatiques éventuellement substitués de 2 à 20 atomes de carbone, de restes aromatiques éventuellement substitués de 6 à 20 atomes de carbone, de résidus de restes alkyle en $C_1$ à $C_{15}$ ou aryle en $C_6$ à $C_{16}$ d'acides organiques ou inorganiques ou de restes aliphatiques-aromatiques éventuellements substitués, de 7 à 20 atomes de carbone.

3. Dérivés d'acide polyparabanique suivant les revendications 1 et 2, caractérisés en ce que les restes $R^1$, $R^2$, $R^3$ et $R^4$ sont dérivés d'hydrogène ou de restes aliphatiques éventuellement substitués de 1–20 atomes de carbone, de restes aromatiques eventuellement substitués de 6–20 atomes de carbone, ou de restes aliphatiques-aromatiques éventuellement substitués de 7 à 20 atomes de carbone ou bien $R^1$ et $R^2$ et, respectivement, $R^3$ et $R^4$ forment ensemble un noyau cyclo-aliphatique de 5 à 10 atomes de carbone.

4. Procédé de produktion de dérivés d'acide polyparabanique suivant les revendications 1 à 3, caractérisé en ce qu'on fait réagir des 2-oxazolines ou des 2-thiazolines de formule (II):

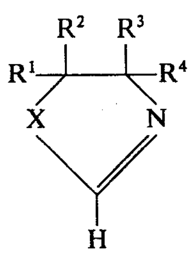

(II)

dans laquelle $R^1$ à $R^4$ et X ont la définition donnée dans les revendications 1 et 3, avec au moins un polyisocyanate organique et, le cas échéant, un mono-isocyanate aliphatique ou aromatique, à des températures comprises entre −20 et 400° C.

5. Procédé suivant la revendication 4, caractérisé en ce qu'on utilise comme isocyanates des composés de formule générale (III):

$$R_5(NCO)_n \qquad (III)$$

dans laquelle $R_6$ a la définition indiquée dans les revendications 1 et 2 et n est un nombre entier de 1 à 4.

6. Procédé suivant la revendication 5, caractérisé en ce que n est égal à 2.